(19) **Europäisches Patentamt European Patent Office Office européen des brevets**

(11) **EP 4 685 728 A1**

(12) **EUROPEAN PATENT APPLICATION**
published in accordance with Art. 153(4) EPC

(43) Date of publication:
**28.01.2026 Bulletin 2026/05**

(21) Application number: **23928784.0**

(22) Date of filing: **11.12.2023**

(51) International Patent Classification (IPC):
**G06Q 50/02** (2024.01)     **A01G 9/24** (2006.01)

(52) Cooperative Patent Classification (CPC):
**A01G 9/24; G06Q 50/02**

(86) International application number:
**PCT/JP2023/044186**

(87) International publication number:
**WO 2024/195217 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2023 JP 2023045338**

(71) Applicant: **Seiwa Company, Limited Shimotsuke-shi, Tochigi 329-0412 (JP)**

(72) Inventors:
• **NIIMURA, Subaru**
  **Shimotsuke-shi, Tochigi 329-0412 (JP)**
• **ODE, Hironobu**
  **Shimotsuke-shi, Tochigi 329-0412 (JP)**

(74) Representative: **Hoffmann Eitle Patent- und Rechtsanwälte PartmbB Arabellastraße 30 81925 München (DE)**

(54) **ENERGY SAVING PERFORMANCE SIMULATION DEVICE FOR AGRICULTURAL HOUSE, DEVICE FOR CALCULATING CURTAIN HEAT TRANSFER INDEX FOR MULTILAYER CURTAIN, COMPUTER PROGRAM, AND RECORDING MEDIUM**

(57)     A fuel consumption amount including heat transfer indexes of various lining covering materials in a calculation element is calculated, and energy-saving performance of a greenhouse is simulated. It is possible to, in both a case where the lining covering material is constituted of a single layer of one curtain member and a case where it is a multilayer curtain constituted of a plurality of curtain members, estimate the fuel consumption amount using their heat transfer indexes, grasp a reduction amount of fuel consumption and a reduction amount of greenhouse effect gas caused by the selected curtain member or multilayer curtain, visualize the energy-saving performance, and select the lining covering material more excellent in the energy-saving performance.

FIG. 1

**Description**

Technical Field

The present invention relates to a technique of finding a heat transfer index of a lining covering material arranged in a greenhouse, and simulating greenhouse energy-saving performance using this heat transfer index.

Background Art

A lining covering material is being provided inside a greenhouse. The lining covering material is constituted of one curtain member in one case and besides constituted as a multilayer curtain using a plurality of curtain members in the other case, and, in both of the cases, is provided openably and closably to mainly cover space above plants, that is, on a ceiling side and is responsible for adjusting functions of heat retention, light shielding, heat shielding, day length, and the like. Patent Documents 1, 2 each disclose a multilayer curtain in which a plurality of individual curtain members constituted using a transparent plastic film, one in which a plastic film is subjected to aluminum vapor deposition, one in which aluminum foil in a fine thread shape is woven, nonwoven fabric, and the like are arranged at intervals between each other. An air layer is formed between the curtain members by making the curtain members in multiple layers, and a heat-retaining property is improved further than a single-layer curtain constituted of one curtain member, resulting in making an effect as energy-saving measures high such as allowing saving of a heating operation time.

Prior Art Document

Patent Document

Patent Document 1: Japanese Patent Application Laid-open No. 2008-29314
Patent Document 2: Japanese Patent Application Laid-open No. 2016-192915

Summary of the Invention

Problems to Be Solved by the Invention

The multilayer curtain each disclosed in Patent Documents 1, 2 is excellent in the heat-retaining property as described above, but the multilayer curtain is operated so that, for example, in a case of a combination of the transparent curtain member and the reflective curtain member subjected to aluminum vapor deposition, the two are closed for heat retention, and first, the reflective curtain member is opened with sunrise, and then the transparent curtain member is opened before the sun rises high. Further, for the transparent curtain member, one having high transparency is favorable in general, and there are also various demands regarding functions such as ultraviolet permeability and light diffusibility. Further, these functions are also affected by the kind of plant targeted for cultivation, weather conditions in an installation region of the greenhouse, and the like, and the required functions are not uniform. In addition, in the multilayer curtain, the number of layers of the plurality of curtain members (number) superimposed at intervals between each other can be set to be not only two layers but also three layers and can also be set to be the number of layers equal to or more than them in some cases, and various functions can be achieved depending on combinations of the curtain members.

In selection of the multilayer curtain, one judged proper in consideration of the kind of plant targeted for cultivation, the weather conditions in the installation region of the greenhouse, further a size of the greenhouse, and the like is used. However, there are very many kinds of curtain members constituting the multilayer curtain, so that when they are combined, the judgment on which is proper is not easy, resulting in that an aspect that cannot avoid depending on experience is also large. There is a case where a characteristic value as the whole of the multilayer curtain is provided as information in addition to individual characteristic values of the curtain members in a sale and manufacture side of the multilayer curtain, but even in the case, the combinations of the curtain members are limited to typical ones.

Further, a suitable cost is also required for installation of the lining covering material, and thus performance of the lining covering material can be desirably simulated beforehand. At this time, a main purpose of arranging the lining covering material is to enhance the heat-retaining property and reduce a cost required for heating as much as possible, and thus the performance regarding a heat-retaining property of a desirable lining covering material and the energy-saving performance of what degree of saving for fuel consumption is obtained by using the lining covering material can be desirably offered.

The present invention was made in consideration of the above, and has an object to provide a technique of making it possible to simulate a reduction amount for fuel consumption in a greenhouse to contribute to energy-saving measures in both a case of using a single-layer curtain member as a lining covering material and a case of constituting a multilayer curtain, and in addition, an object to provide a technique of making it possible to calculate a heat transfer index related to a heat-retaining property in the case of using the multilayer curtain as the lining covering material regardless of combinations of curtain members.

Means for Solving the Problems

To solve the above problem, the present invention provides, a greenhouse energy-saving performance simulation apparatus including:

a fuel consumption amount calculation unit which finds, in a case of cultivating a predetermined plant during a predetermined period in a greenhouse, a fuel consumption amount for securing a heat quantity required for maintenance of a set night temperature suitable for the plant, including a heat transfer index of a lining covering material in the greenhouse in a calculation element; and
a fuel reduction amount calculation unit which compares the fuel consumption amount with a reference fuel consumption amount, and finds a reduction amount of fuel consumption caused by using the lining covering material.

Preferably, the greenhouse energy-saving performance simulation apparatus is configured to include a fuel reduction cost calculation unit which calculates a fuel cost and makes a comparison with a reference fuel cost calculated using the reference fuel consumption amount to calculate a fuel reduction cost, based on the fuel consumption amount calculated by the fuel consumption amount calculation unit.

Preferably, the greenhouse energy-saving performance simulation apparatus is configured to include a greenhouse-effect-gas reduction-amount calculation unit which calculates a greenhouse effect gas emission amount and makes a comparison with a reference greenhouse effect gas emission amount calculated using the reference fuel consumption amount to calculate a reduction amount of the greenhouse effect gas, based on the fuel consumption amount calculated by the fuel consumption amount calculation unit.

Preferably, the fuel consumption amount calculation unit is configured to include a heat transfer index determination unit which finds a heat transfer index of the lining covering material.

Preferably, the heat transfer index determination unit is configured to, when a single-layer curtain member is selected as the lining covering material, gain access to an individual heat transfer index storage unit which stores individual heat transfer indexes of curtain members, read an individual heat transfer index of the curtain member which has been selected, and determine the individual heat transfer index which has been read as a heat transfer index of the lining covering material.

Preferably, the heat transfer index determination unit is configured to, when a multilayer curtain configured to arrange a plurality of curtain members in multiple layers is used as the lining covering material, gain access to an individual heat transfer index storage unit which stores individual heat transfer indexes of curtain members, read individual heat transfer indexes of the plurality of curtain members which have been selected, use a prediction model generated by machine learning with individual heat transfer indexes of curtain members set as explanatory variables and with a curtain heat transfer index which is a heat transfer index in a multilayer state of a multilayer curtain set as an objective variable, calculate a curtain heat transfer index of the multilayer curtain constituted of the plurality of curtain members which have been selected, and determine the curtain heat transfer index as a heat transfer index of the lining covering material.

Preferably, the curtain heat transfer index is configured to be calculated under a condition in which a curtain member in an uppermost layer has an equal or more heat-retaining property by a comparison with a curtain member in a further lower layer between the curtain members constituting the multilayer curtain.

Preferably, as the heat transfer index, an average heat-release coefficient found from a value obtained by dividing a heating heat quantity for a night by a nighttime degree hour for the night and a coverage area is used.

Further, the present invention provides a multilayer-curtain curtain heat transfer index calculation apparatus which calculates a curtain heat transfer index which is a heat transfer index in a multilayer state of a multilayer curtain, configured to arrange curtain members in multiple layers, of a lining covering material provided in a greenhouse, the multilayer-curtain curtain heat transfer index calculation apparatus including
a curtain heat transfer index calculation unit which uses a prediction model generated by machine learning with individual heat transfer indexes of a plurality of the curtain members constituting the multilayer curtain set as explanatory variables and with a curtain heat transfer index of the multilayer curtain set as an objective variable, reads, based on selection information of the curtain members, individual heat transfer indexes of corresponding curtain members from an individual heat transfer index storage unit which stores individual heat transfer indexes of the curtain members, and calculates a curtain heat transfer index of the multilayer curtain constituted of the plurality of curtain members which have been selected.

Preferably, the curtain heat transfer index is configured to be calculated under a condition in which a curtain member in an uppermost layer has an equal or more heat-retaining property by a comparison with a curtain member in a further lower layer between the curtain members constituting the multilayer curtain.

Preferably, as the heat transfer index, an average heat-release coefficient found from a value obtained by dividing a heating heat quantity for a night by a nighttime degree hour for the night and a coverage area is used.

Further, the present invention provides a computer program which causes a computer to function as a greenhouse energy-saving performance simulation apparatus, the computer program causing the computer to execute

a procedure for finding, in a case of cultivating a predetermined plant during a predetermined period in a greenhouse, a fuel consumption amount for securing a heat quantity required for maintenance of a set night temperature suitable for the plant, including a heat transfer index of a lining covering material in the greenhouse in a calculation element; and a procedure for comparing the fuel consumption amount with a reference fuel consumption amount, and finding a reduction amount of fuel consumption caused by using the lining covering material.

Preferably, a fuel cost is calculated and compared with a reference fuel cost calculated using the reference fuel consumption amount to calculate a fuel reduction cost, based on the fuel consumption amount.

Preferably, a greenhouse effect gas emission amount is calculated and compared with a reference greenhouse effect gas emission amount calculated using the reference fuel consumption amount to calculate a reduction amount of the greenhouse effect gas, based on the fuel consumption amount.

Preferably, when a single-layer curtain member is selected as the lining covering material, access to an individual heat transfer index storage unit which stores individual heat transfer indexes of curtain members is gained, an individual heat transfer index of the curtain member which has been selected is read, and the individual heat transfer index which has been read is used as a heat transfer index of the lining covering material.

Preferably, when a multilayer curtain configured to arrange a plurality of curtain members in multiple layers is used as the lining covering material, access to an individual heat transfer index storage unit which stores individual heat transfer indexes of curtain members is gained, individual heat transfer indexes of the plurality of curtain members which have been selected are read, a prediction model generated by machine learning with individual heat transfer indexes of curtain members set as explanatory variables and with a curtain heat transfer index which is a heat transfer index in a multilayer state of a multilayer curtain set as an objective variable is used, a curtain heat transfer index of the multilayer curtain constituted of the plurality of curtain members which have been selected is calculated, and the curtain heat transfer index is used as a heat transfer index of the lining covering material.

Preferably, the curtain heat transfer index is calculated under a condition in which a curtain member in an uppermost layer has an equal or more heat-retaining property by a comparison with a curtain member in a further lower layer between the curtain members constituting the multilayer curtain.

Preferably, as the heat transfer index, an average heat-release coefficient found from a value obtained by dividing a heating heat quantity for a night by a nighttime degree hour for the night and a coverage area is used.

Further, the present invention provides a computer program which causes a computer to function as a multilayer-curtain curtain heat transfer index calculation apparatus, the computer program causing the computer to execute

as a procedure for estimating a curtain heat transfer index which is a heat transfer index in a multilayer state of a multilayer curtain in which curtain members are arranged in multiple layers in a greenhouse, a procedure for using a prediction model generated by machine learning with individual heat transfer indexes of a plurality of the curtain members constituting the multilayer curtain set as explanatory variables and with a curtain heat transfer index of the multilayer curtain set as an objective variable, reading, based on selection information of the curtain members, individual heat transfer indexes of corresponding curtain members from an individual heat transfer index storage unit which stores individual heat transfer indexes of the curtain members, and calculating a heat transfer index of the multilayer curtain constituted of the plurality of curtain members which have been selected.

Preferably, the curtain heat transfer index is calculated under a condition in which a curtain member in an uppermost layer has an equal or more heat-retaining property by a comparison with a curtain member in a further lower layer between the curtain members constituting the multilayer curtain.

Preferably, as the heat transfer index, an average heat-release coefficient found from a value obtained by dividing a heating heat quantity for a night by a nighttime degree hour for the night and a coverage area is used.

Further, the present invention provides a computer-readable recording medium in which the above-described computer program is recorded. The recording medium in which the computer program is stored may be a non-transitory recording medium. The non-transitory recording medium is not particularly limited, and there are cited recording mediums such as a flexible disk, a hard disk, a CD-ROM, an MO (magneto-optical disk), a DVD-ROM, and a memory card, for example.

Effect of the Invention

According to the present invention, it is possible to, in both the case where the lining covering material is constituted of the single layer of one curtain member and the case where it is the multilayer curtain constituted of the plurality of curtain members, estimate the fuel consumption amount using their heat transfer indexes, grasp the reduction amount of fuel consumption and the reduction amount of greenhouse effect gas caused by the selected curtain member or multilayer curtain, visualize the energy-saving performance, and select the lining covering material more excellent in the energy-saving performance.

Further, in the case of the multilayer curtain, the curtain heat transfer index which is the heat transfer index in the multilayer state is only limited information conventionally due to many kinds of combinations, but according to the present invention, the curtain heat transfer index of the multilayer curtain can be found using the individual heat transfer indexes of the selected curtain members by the prediction model. Consequently, in installing the multilayer curtain, a level of the heat-retaining property can be understood, and the selection range of the curtain members constituting the multilayer curtain is widened, resulting in that a combination excellent in the heat-retaining property can be selected among the curtain members with desirable functions to select more proper multilayer curtain.

Brief Description of Drawings

[FIG. 1] FIG. 1 is a block diagram illustrating a schematic configuration of a greenhouse energy-saving performance simulation apparatus according to one embodiment of the present invention.

[FIGs. 2] FIG. 2(a) is a view illustrating an image of a two-layer multilayer curtain, and FIG. 2(b) is a view illustrating an image of a three-layer multilayer curtain.

[FIG. 3] FIG. 3 is a chart illustrating one example of a screen of a display showing simulation results of a fuel consumption amount, a fuel reduction cost, a fuel cost, a greenhouse effect gas emission amount, a greenhouse effect gas reduction amount, and so on for each lining covering material.

[FIGs. 4] FIGs. 4(a), (b) are each a chart illustrating one example of a screen of a display in selecting curtain members constituting the lining covering materials.

[FIG. 5] FIG. 5 is a chart illustrating one example of a screen of a display on which information required in calculating a required heat quantity is input.

[FIG. 6] FIG. 6 is a diagram for explaining a calculation process of a periodic heat load in a required heat quantity calculation unit.

[FIG. 7] FIG. 7 is a diagram for explaining a calculation process of a nighttime degree hour.

[FIG. 8] FIG. 8 is a diagram for explaining a calculation process in a case of including a daily daytime heating load in the periodic heat load.

[FIG. 9] FIG. 9 is a diagram for explaining a calculation process of a greenhouse effect gas emission amount in a heating-origin greenhouse-effect-gas emission-amount calculation unit.

[FIG. 10] FIG. 10 is a block diagram illustrating a schematic configuration of a multilayer-curtain curtain heat transfer index calculation apparatus according to one embodiment of the present invention.

Modes for Carrying out the Invention

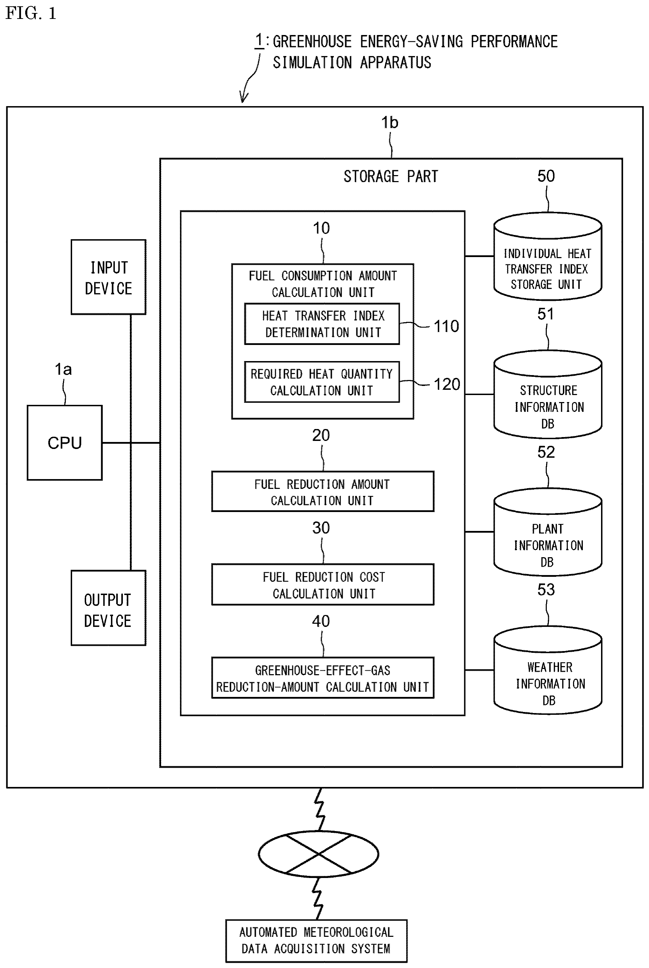

Hereinafter, based on an embodiment of the present invention illustrated in the drawings, description will be made in more detail. FIG. 1 is a diagram illustrating a schematic configuration of a greenhouse energy-saving performance simulation apparatus 1 according to this embodiment. As illustrated in this diagram, the greenhouse energy-saving performance simulation apparatus 1 of this embodiment is constituted of a computer (the kind of computer is not limited, and includes a personal computer, a microcomputer, a portable information terminal, and the like) including a processor (CPU) 1a and a storage part (a case of being referred to as "storage part" in this description means including both of volatile and nonvolatile recording mediums such as main storage and storage, and neither of them is restrictive) 1b.

Specifically, in the greenhouse energy-saving performance simulation apparatus 1 of this embodiment, a computer program which executes procedures to cause it to function as a fuel consumption amount calculation unit 10, a fuel reduction amount calculation unit 20, a fuel reduction cost calculation unit 30, and a greenhouse-effect-gas reduction-amount calculation unit 40 is stored in the storage part 1b. The computer program is normally stored in the nonvolatile recording medium such as a hard disk or an SSD which is built in or externally attached to the computer (greenhouse energy-saving performance simulation apparatus 1), and is read and executed by the above-described processor 1a. Further, a storage location of various kinds of data may be a storage part connected via a communication line other than the storage part built in or externally attached to the greenhouse energy-saving performance simulation apparatus 1.

The fuel consumption amount calculation unit 10 finds, in a case of cultivating a predetermined plant during a predetermined period in the greenhouse, a fuel consumption amount for securing a heat quantity required for maintenance of a set night temperature suitable for the plant, including a heat transfer index of a lining covering material in a calculation element. For this reason, the fuel consumption amount calculation unit 10 includes a heat transfer index determination unit 110 which determines the heat transfer index of the lining covering material, and a required heat quantity calculation unit 120 which calculates the heat quantity required for maintenance of the set night temperature (required heat quantity).

[Calculation of heat transfer index]

When a single-layer curtain member is selected as the lining covering material, the heat transfer index determination unit 110 gains access to an individual heat transfer index storage unit 50 which stores individual heat transfer indexes of curtain members, reads an individual heat transfer index of the selected curtain member, and determines the read individual heat transfer index as a heat transfer index of the lining covering material which is the calculation element.

On the other hand, when a multilayer curtain configured to arrange a plurality of curtain members in multiple layers is used as the lining covering material, it gains access to the individual heat transfer index storage unit 50, reads individual heat transfer indexes of the plurality of curtain members which have been selected, uses a prediction model generated by machine learning with individual heat transfer indexes of curtain members set as explanatory variables and with a curtain heat transfer index which is a heat transfer index in a multilayer state of a multilayer curtain set as an objective variable, and calculates a curtain heat transfer index of the multilayer curtain constituted of the plurality of curtain members which have been selected. Then, the found curtain heat transfer index is determined as a heat transfer index of the lining covering material which is the calculation element.

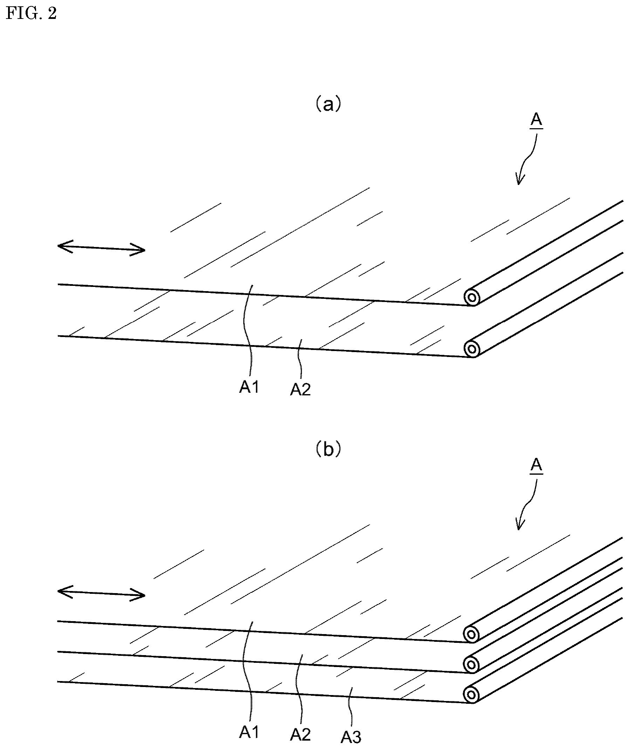

Multilayer curtains A are each a lining covering material configured to be arranged in multiple layers such as two layers constituted of curtain members A1, A2 (FIG. 2(a)), or three layers constituted of curtain members A1, A2, A3 (FIG. 2(b)) in the greenhouse. The curtain members A1, A2, A3 are not limited to the two layers or the three layers, and may be set to four layers and the like.

Here, the heat transfer index is an index related to a heat transfer of a curtain, and can use an index referred to, concretely, an overall heat transfer coefficient, a heat release coefficient obtained by adding a ventilation heat-transfer coefficient found by dividing a loss heat quantity due to ventilation by a total wall area, or a heating load coefficient ("Experimental Determination of Greenhouse Heating Load Coefficient", Tadashi TAKAKURA, Masumi OKADA, Journal of Agricultural Meteorology March 1972, Volume 27, Issue 3), or an average heat-release coefficient. Any of them can be used, but the heat release coefficient is affected by variations in environment (how clouds cover the sky, and the like), so that the average heat-release coefficient, independent of such variations, which is an expected value of the heat release coefficient is preferably used. Note that the "average heat-release coefficients" are values each obtained by finding an overnight heating load coefficient obtained by dividing a heating heat quantity for a night by a nighttime degree hour for the night and a coverage area, regarding a plurality of kinds of films (curtain members) within an experimental period, to average them for each kind of films (curtain members). In this embodiment, there was adopted a value found by an experiment from November 9th, 1980 to February 3rd, 1981 conducted by providing four cultivation beds in each of three A to C houses constructed in Oyama Factory Farm Field of SEIWA CO., LTD. (a surface area: 262 m$^2$, a floor area: 120 m$^2$, an outer coating film: an agricultural vinyl chloride film, a heating system: a warm-air heater, a shape of curtain: A house ... a single layer of agricultural vinyl film, B, C houses ... double shaft and double layer, a curtain position (lower layer): A, B houses ... 1.8 m (from the ground), C house ... 1.85 m (from the ground), an interlayer distance in a case of double layer: 20 cm). In the experiment, only a portion on each cultivation bed was covered with a black mulch, and turnip greens, lettuce, field peas, and kidney beans were each planted for each cultivation bed, and an average value of the heating load coefficient in each house was found to correspond to the kind of films, and when the heating load coefficient of the A house was set to 100%, it was found what percent value was obtained according to combination of various films as the heating load coefficient of each of the B, C houses, and this value was set as the "average heat-release coefficient".

As the curtain members A1, A2, A3, 13 kinds of prediction models were prepared, and 27 kinds of the multilayer curtains A (24 kinds for two layers, three kinds for three layers) obtained by combining them were produced, and, the prediction models were each generated by a regression analysis with average heat-release coefficients as individual heat transfer indexes of the curtain members A1, A2, A3 (individual average heat-release coefficients) set as explanatory variables and with an average heat-release coefficient as a curtain heat transfer index of the multilayer curtain A itself which was produced (curtain average heat-release coefficient) set as an objective variable. The following formulas are examples of these prediction models.

(Prediction model in a case of two-layer multilayer curtain (prediction model for two layers))

Curtain average heat-release coefficient:

$$K = 0.578 \cdot K1 + 0.252 \cdot K2 - 0.326$$

(K1 is an individual average heat-release coefficient of an upper-layer curtain member, K2 is an individual average heat-release coefficient of a middle-layer (in the case of two layers, a middle layer is a lower layer) curtain member)

(Prediction model in a case of three-layer multilayer curtain (prediction model for three layers))

Curtain average heat-release coefficient: K' = 0.334·K1' + 0.146·K2' + 0.252·K3' - 0.514
(K1' is an individual average heat-release coefficient of an upper-layer curtain member, K2' is an individual average heat-release coefficient of a middle-layer curtain member, K3' is an individual average heat-release coefficient of a lower-layer curtain member)

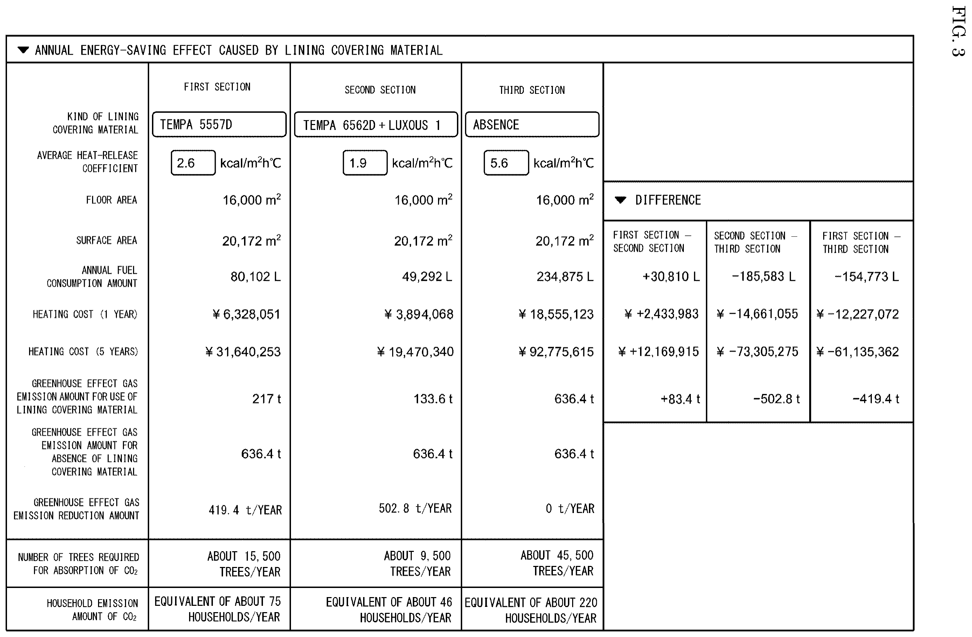

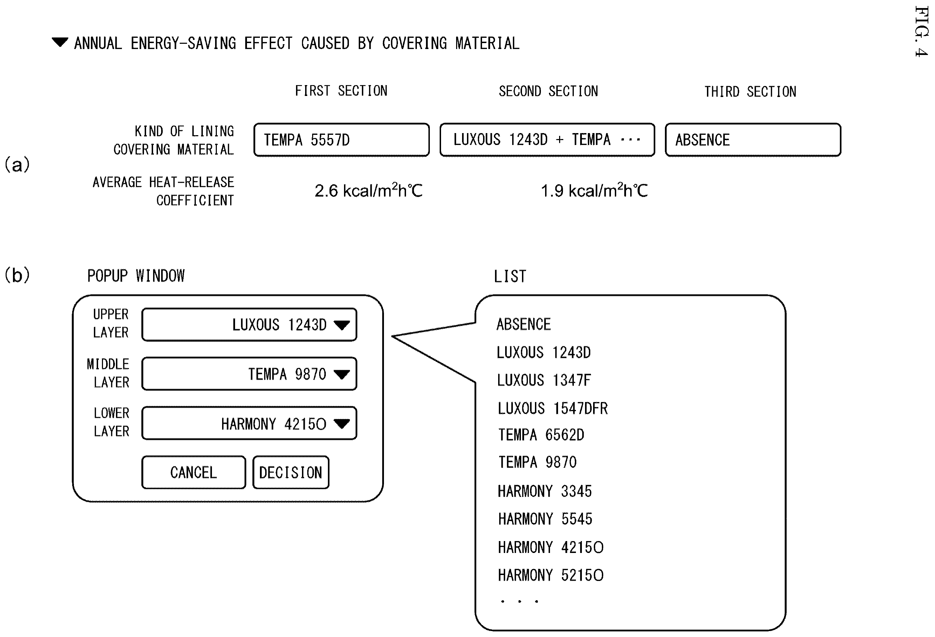

When the heat transfer index determination unit 110 acquires selection information of the curtain members, for example, when a transparent curtain member "Luxous (brand name)" is selected as the curtain member A1 in an upper layer and "Tempa (brand name)" is selected as the curtain member A2 in a middle layer (lower layer in the case of two layers) by an input from the input device, it gains access to the individual heat transfer index storage unit 50, reads the individual average heat-release coefficients of the curtain members A1, A2, applies them to the above-described prediction model for two layers, and calculates a curtain average heat-release coefficient K of the multilayer curtain A.
At this time, the curtain average heat-release coefficient K is preferably calculated under a condition in which the curtain member A1 in the uppermost layer has an equal or more heat-retaining property by a comparison with the curtain members A2, A3 in further lower layers between the curtain members constituting the multilayer curtain A. That is, it is preferable that as the curtain member A1 in the upper layer, an equal or more one is set to be selected in terms of the heat-retaining property, that is, one in which by the comparison with the curtain members A2, A3 in the middle layer or the lower layer, the individual average heat-release coefficient has the same value as or a lower value than it is set to be selected. For example, when the individual average heat-release coefficient of the curtain member A1 in the upper layer which has been selected is higher than the average heat-release coefficients of the curtain members A2, A3 for middle layer or for lower layer, processing for reselection can be preformed, or processing in which in a step of selecting the curtain members A2, A3 for middle layer or for lower layer, only ones higher in the average heat-release coefficient than the curtain member A1 in the upper layer which has already selected is shown in a list can also be performed. Further, when the curtain members A2, A3 for middle layer or for lower layer are selected in advance, processing in which only one lower in the individual average heat-release coefficient than them is displayed in the list as the curtain member A1 for upper layer can also be performed.
The heat transfer index determination unit 110 displays such a popup window as illustrated in FIG. 4(b) when sections of "kind of lining covering material" in FIG. 3 and FIG. 4(a) are clicked, for example. A desired curtain member is specified using a pull-down menu in each of input sections of "upper layer", "middle layer", and "lower layer" in this popup window. In this case, the other functions of the curtain members such as, for example, transparency, a light shielding property, and a light scattering property are selected while an operator refers to the other materials. Alternatively, the words characteristic of each of the curtain members, such as transparency, light shielding, and light scattering, may be added adjacently to each of the brand names of the curtain members displayed in the pull-down menu. As a matter of course, an arbitrary selection can also be made to select one with a high heat-retaining property (one with a low average heat-release coefficient) without referring to such other functions.
For example, "Luxous 1243D" is set to be selected in the input section for the upper layer, "Tempa 6562D" is set to be selected in the input section for the middle layer, and "Harmony (brand name) 4215O" is set to be selected in the input selection for the lower layer. Then, the heat transfer index determination unit 110 gains access to the individual heat transfer index storage unit 50, and reads individual average heat-release coefficients of the curtain members. In this case, the curtain members in three layers of the upper layer, the middle layer, and the lower layer (Luxous 1243D + Tempa 6562D + Harmony 42150) are selected, so that the heat transfer index determination unit 110 applies the above-described prediction model for three layers, calculates a curtain average heat-release coefficient K of the multilayer curtain A, and determines this as a heat transfer index to be used for the calculation element. This example results in 1.9 kcal/m$^2$h°C. The curtain average heat-release coefficient K is displayed in a section of "average heat-release coefficient" in a screen in FIG. 3. Note that in an example in FIG. 3, the average surface-heat coefficient when the multilayer curtain A of these three layers is adopted is displayed in a second section, an average heat-release coefficient when a one-layer curtain is adopted is displayed in a first section, and an average heat-release coefficient when no curtain is arranged is displayed in a third section.

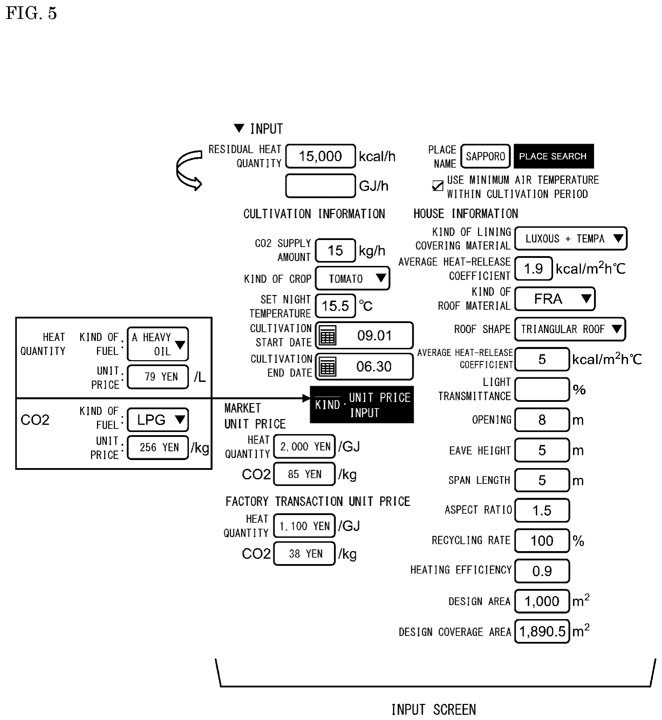

Further, the configuration of the multilayer curtain A which has been selected in the above is also reflected on a section of "kind of lining covering material" in an input screen for calculating the required heat quantity illustrated in FIG. 5, and the average heat-release coefficient is also reflected. Note that in the above explanation, when the section of "kind of lining covering material" is clicked in displaying the screen in FIG. 3, the popup window in FIG. 4(b) is displayed, and it is also possible that when the input screen for the required heat quantity illustrated in FIG. 5 is displayed in preference and the section of "kind of lining covering material" is clicked in such an input screen, the popup window in FIG. 4(b) is displayed, and by selecting the curtain members, the selection result is reflected also on the screen in FIG. 3 together with the screen in FIG. 5, and it is optional which screen is displayed in preference.

Further, when only one of the input sections of "upper layer", "middle layer", and "lower layer" in the popup window illustrated in FIG. 4(b), for example, "Tempa 6562D" in the input section for the middle layer is selected and there is no selection in the input selections for the upper layer and the lower layer, the heat transfer index calculation unit 110 gains access to the individual heat transfer index storage unit 50 as described above, reads an individual average heat-release coefficient of "Tempa 6562D", and determines the individual average heat-release coefficient as a heat transfer index to be used for the calculation element.

[Calculation of heat quantity required for maintenance of set night temperature (required heat quantity)]

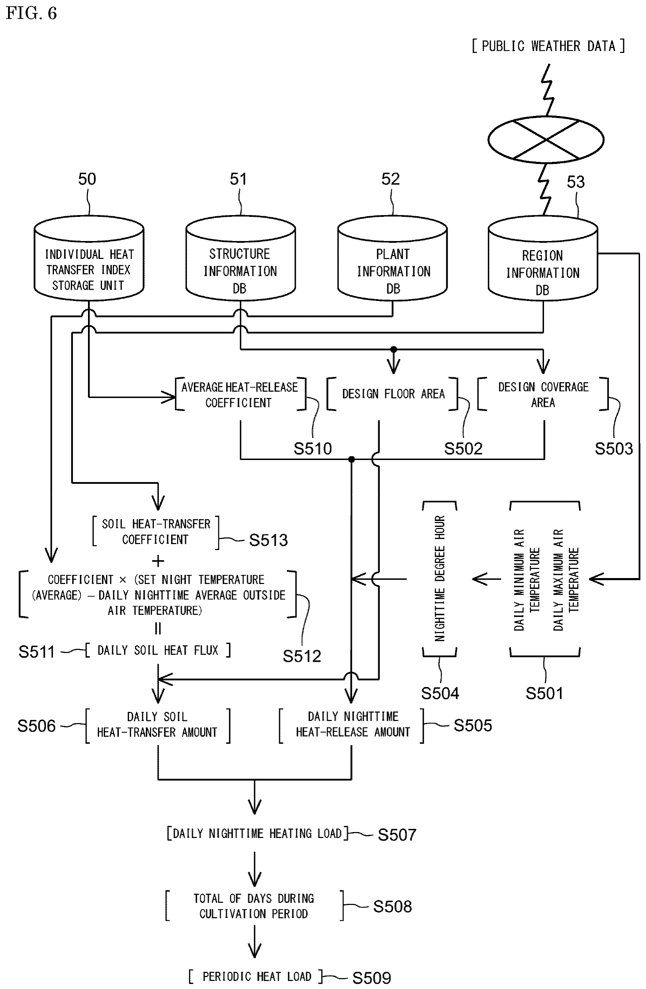

The required heat quantity calculation unit 120 calculates the required heat quantity for securing the set night temperature in the greenhouse. The set night temperature is specified according to the kind of plant, and is a value corresponding to an average value during a cultivation period. However, it is preferably specified also in consideration of an installation region of the greenhouse, seasons, and the like. The set night temperature can also be set by a manual input in the input screen for calculation of the required heat quantity illustrated in FIG. 5, and preferably, the greenhouse energy-saving performance simulation apparatus 1 has a plant information database 52 which stores a proper night temperature (average value) for each kind of plant (refer to FIG. 6), and the required heat quantity calculation unit 120 is configured to gain access to the plant information database 52, and, read and set a night temperature (average value) corresponding to such a plant when the kind of plant targeted for cultivation is selected in the input screen. For example, in a case of tomato, a set night temperature = 15.5°C is read and set.

The required heat quantity calculation unit 120 finds a daily nighttime heating load (S507), in consideration of a design floor area (S502) and a design coverage area (S503) of the greenhouse, to a daily maximum air temperature and a daily minimum air temperature (S501) obtained from a weather information database 53 in which public weather data of the installation region of the greenhouse is stored, and finds a periodic heat load (S509) during the cultivation period using this daily nighttime heating load (S507), as illustrated in FIG. 6. This periodic heat load (S509) is the required heat quantity for securing the set night temperature during the cultivation period. Note that the "design floor area" is a design value of a floor area of the greenhouse planned for construction, and is a value calculated assuming it to be in, for example, a square floor shape in order to reduce a computation load. The "design coverage area" is a design value of an area, covered with a covering material, adding a side face, an end face, and, a ceiling face and a gable face forming a roof of the greenhouse together.

In order to find the daily nighttime heating load (S507), a daily nighttime heat-release amount (S505) and a daily soil heat-transfer amount (S506) are found. The daily nighttime heat-release amount (S505) is found by "design coverage area (S503) × average heat-release coefficient of lining covering material (roof material in a case where the lining covering material is not selected) (S510) × daily nighttime degree hour (S504)". The design floor area and the design coverage area are read from a structure information database 51.

As the average heat-release coefficient (S510) of the lining covering material, a value of the heat transfer index found by the heat transfer index determination unit 110 described above (in a case of only one curtain member, the individual heat transfer index of the curtain member (individual average heat-release coefficient), in a case of the multilayer curtain A, the curtain heat transfer index (curtain average heat-release coefficient)) is used.

The daily nighttime degree hour (S504) is a value obtained by integrating a difference between the above-described set night temperature and an outside air temperature. For the nighttime degree hour, an approximate value is used. It is found in accordance with a calculation method of a geometrical heating degree hour when the daily maximum air temperature and the daily minimum air temperature in the region are connected with a straight line (refer to Journal of Agricultural Meteorology (J. Agr. Met.) 38 (1): pages 29-36, 1982, Makio HAYASHI, Toyoki KOZAI "Comparison of Actual and Calculated Heating Degree Hours and a Proposition of Heating Degree Hour Diagram").

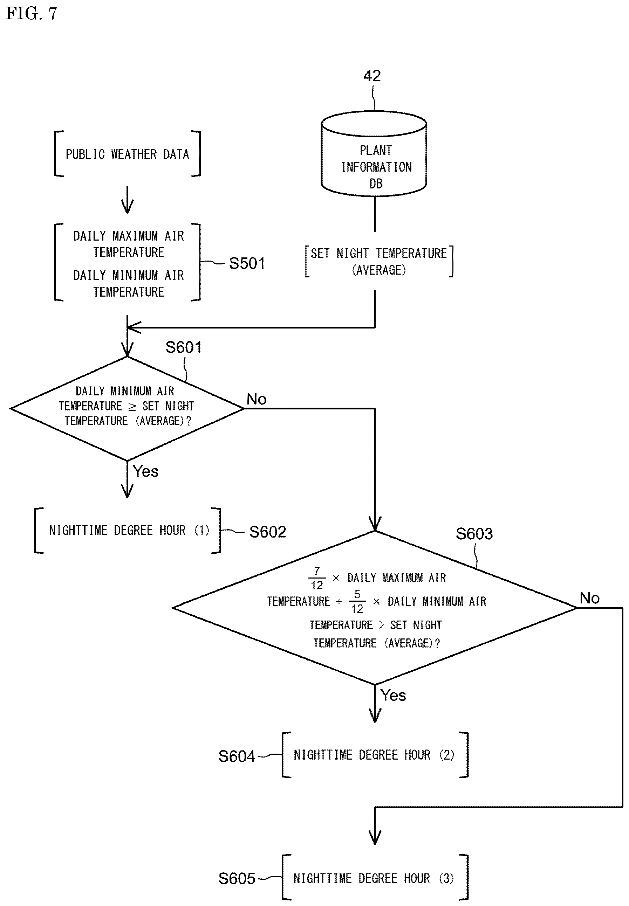

Specifically, as illustrated in FIG. 7, whether to be "daily minimum air temperature ≥ set night temperature" or not is determined (S601).

a) A case where the daily minimum air temperature is equal to or more than the set night temperature (a case of Yes in S601):

The nighttime degree hour is found by "(14 × set night temperature (average value) + (49 × daily maximum air temperature + 119 × daily minimum air temperature)/12) × 0". That is, in this case, there is no need for heating, and thus the nighttime degree hour (1) becomes 0 (S602).

b) Next, whether to be "7/12 × daily maximum air temperature + 5/12 × daily minimum air temperature > set night temperature (average value)" or not is determined (S603).

b-1) A case of exceeding the set night temperature (a case of Yes in S603):

By "12 × (set night temperature (average value) - daily minimum air temperature)2/(daily maximum air temperature - daily minimum air temperature)", the nighttime degree hour (2) is found (S604).

b-2) A case of being equal to or less than the set night temperature (a case of No in S603):

By "(14 × set night temperature (average value) + (49 × daily maximum air temperature + 119 × daily minimum air temperature)/12) × 1", the nighttime degree hour (3) is found (S605).

Note that it is more preferable in terms of accuracy to find the approximate value of the nighttime degree hour by using a machine learning model generated with the daily maximum air temperature and the daily minimum air temperature set as explanatory variables and with the nighttime degree hour set as an objective variable.

A daily soil heat-transfer amount (S506 in FIG. 6) is found by multiplying a daily soil heat flux (S511) by the design floor area (for example, 1000 m$^2$) (S502) and multiplying this by 14 hours corresponding to a night time from sunset to the following morning. The daily soil heat flux (S511) is found by multiplying a difference between the set night temperature (average value) and a daily nighttime average outside air temperature by a coefficient (S512) and adding the soil heat-transfer coefficient (in a case of Sapporo, -31) (S513) to this. Note that the soil heat-transfer coefficient is a value assigned by distinguishing warm points and cold points regarding points based on the public weather data, and in this embodiment, "-36" is assigned as the warm point in a case where the number of days of a daily minimum air temperature of 0°C or less is less than 112 days/year, and "-31" is assigned as the cold point in a case where the number of days of a daily minimum air temperature of 0°C or less is 112 days or more.

The daily nighttime average outside air temperature is found, using the daily maximum air temperature and the daily minimum air temperature (S501) in the region, by "(5 × daily maximum air temperature + 19 × daily minimum air temperature)/24".

By adding the daily nighttime heat-release amount (S505) and the daily soil heat-transfer amount (S506) obtained in this manner together, the daily nighttime heating load (S507) is found. When a total of the daily nighttime heat-release amount (S505) and the daily soil heat-transfer amount (S506) is 0 or less, the daily nighttime heating load is calculated as 0.

The daily nighttime heating loads (S507) are found for the number of days corresponding to the cultivation period, and they are added together (S508). The periodic heat load is thus obtained (S509). Note that if the period is set for each month, a monthly periodic heat load is found, and if ones for 12 months are added together, an annual periodic heat load can be obtained.

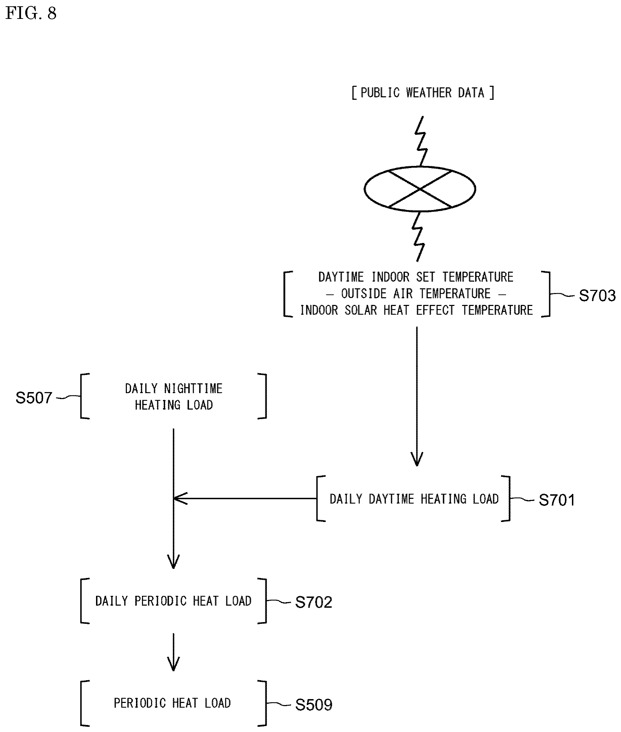

However, in finding the periodic heat load (S509), as illustrated in FIG. 8, not only the daily nighttime heating load (S507) but also a daily daytime heating load (S701) is added to find a daily periodic heat load (S702), and it is preferable to be configured to find the daily periodic heat loads for days corresponding to the cultivation period to add them together. The daily daytime heating load (S701) is a value in consideration of an effect of an amount of solar radiation. For the daily daytime heating load (S701), a fixed value can also be adopted simply, but it is preferable to refer to the public weather data, find a "daytime indoor set temperature - outside air temperature - indoor solar heat effect temperature" (S703), and find a value (degree hour) obtained by integrating only a positive part in it. Thus, by using the daily daytime heating load (S701), calculation accuracy of the periodic heat load (S509) increases. It is more preferable for the purpose of increasing the accuracy to find the daily daytime heating load (degree hour) (S701) by using a machine learning model generated with the daily maximum air temperature, the daily minimum air temperature, and sunshine hours set as explanatory variables.

Note that as described above, the required weather data such as the daily maximum air temperature and the daily minimum air temperature is stored in the weather information database 53 to match a region (refer to FIG. 6). The weather information database 53 can be formed by capturing the required information from Automated Meteorological Data Acquisition System (AMeDAS) or the like of the region. Note that without being limited to a case of reading these pieces of the information by access to the weather information database 53, it is also possible to use a scheme to read it by direct access to Automated Meteorological Data Acquisition System or the like of the region.

[Calculation of fuel consumption amount]

The fuel consumption amount calculation unit 10 calculates a fuel consumption amount required to secure the periodic heat load when the periodic heat load (S509) which is the required heat quantity in the case of using the multilayer curtain A constituted of three layers of the upper layer, the middle layer, and the lower layer (Luxous 1243D + Tempa 6562D + Harmony 42150) is found by the required heat quantity calculation unit 120. First, the periodic heat load obtained in the above manner is divided by a heating efficiency (for example, 0.9) (S802). Note that the heating efficiency is an arbitrary value for considering a loss until reaching the interior of the greenhouse from a heat source in securing the required heat quantity in the greenhouse, but strictly by reason of the simulation, a comparison only needs to become possible using the required heat quantity in the greenhouse, and the heating efficiency is not necessarily required to be considered. However, a value closer to an actual greenhouse effect gas emission amount can be found by considering the heating efficiency.

For example, when an annual periodic heat load = 1734.571389 GJ which is the required heat quantity is found by the required heat quantity calculation unit 120, this is divided by, for example, the heating efficiency = 0.9 to obtain 1927.301543 GJ. By dividing this value by a unit heating value according to the type of fuel to be used, an annual fuel consumption amount is found. For example, as illustrated in FIG. 5, when an A heavy oil is selected in the input screen, a unit heating value of the A heavy oil of 39.1 GJ/kL is adopted. Consequently, in this example, 1927.301543 GJ/39.1 GJ/kL = 49.29159957 kL = 49291.59957 L is found as the annual fuel consumption amount.

[Calculation of fuel reduction amount]

When the fuel consumption amount according to the selected lining covering material is found in the fuel consumption amount calculation unit 10, the fuel reduction amount calculation unit 20 compares a value thereof with a reference fuel consumption amount. As the reference fuel consumption amount, for example, a fuel consumption amount in a case of installing no lining covering material can be set.

The first section in FIG. 3 is an example in which "kind of lining covering material" is one curtain member "Tempa 5557D", the second section is an example in which it is the multilayer curtain of three "Luxous 1243D + Tempa 6562D + Harmony 42150", and the third section is an example of installing no lining covering material. Note that as the calculation of the fuel consumption amount in a case of using no lining covering material in the third section, the same calculation as the above is performed using an average heat-release coefficient of not the lining covering material but the roof material (for example, 5.6 kcal/m$^2$h°C in a case where the roof material is a film made of fluorocarbon resin) in the fuel consumption amount calculation unit 10.

As a result, the annual fuel consumption amount is calculated and displayed as 80,102 L in a case in the first section, 49,292 L in a case in the second section, and 234,875 L in a case in the third section. When the case of arranging no lining covering material in the third section is set as the reference fuel consumption amount between these, the fuel reduction amounts are as follows.

$$\text{The second section} - \text{the third section} = -185{,}583 \text{ L}$$

$$\text{The first section} - \text{the third section} = -154{,}773 \text{ L}$$

Consequently, the lining covering material in the second section results in having a higher energy-saving effect than the lining covering material in the first section.

Note that in the reference fuel consumption amount, besides the case of installing no lining covering material, a fuel consumption amount calculated using an appropriate lining covering material can also be set as a reference fuel consumption amount. In the examples in FIG. 3, it is also naturally possible to, on the basis of either the case in the first section or the case in the second section, compare them by finding a difference between the two. For example,

$$\text{The first section} - \text{the second section} = +30{,}810 \text{ L}$$

is obtained, and it can be grasped that the case in the first section is larger in the fuel consumption amount than that in the second section.

[Calculation of fuel reduction cost]

The fuel reduction cost calculation unit 30 calculates a fuel cost and makes a comparison with a reference fuel cost calculated using the reference fuel consumption amount to calculate a fuel reduction cost, based on the fuel consumption amount according to the above-described selected lining covering material calculated by the fuel consumption amount calculation unit 10.

For example, a unit price of the A heavy oil is set to ¥79/L (about ¥2,000/GJ in a unit price per heat quantity).

The case of the lining covering material in the first section (single layer):

$$80,102 \text{ L} \times ¥79 = ¥6,328,051/\text{year}$$
$$¥31,640,253/\text{five years}$$

The case of the lining covering material in the second section (multilayer curtain):

$$49,292 \text{ L} \times ¥79 = ¥3,894,068/\text{year}$$
$$¥19,470,340/\text{five years}$$

The case of the absence of the lining covering material in the third section:

$$234,875 \text{ L} \times ¥79 = ¥18,553,123/\text{year}$$
$$¥92,775,615/\text{five years}$$

As a result, on the basis of the absence of the lining covering material in the third section, differences are as follows.

$$\text{The second section} - \text{the third section} = ¥-14,661,005/\text{year}$$
$$¥-73,305,275/\text{five years}$$

$$\text{The first section} - \text{the third section} = ¥-12,227,072/\text{year}$$
$$¥-61,135,362/\text{five years}$$

In a case on the basis of either the case in the first section or the case in the second section, a difference between the two is as follows.

$$\text{The first section} - \text{the second section} = ¥+2,433,983/\text{year}$$
$$¥+12,169,915/\text{five years}$$

It is found from the above that the fuel reduction cost in the case in the second section is the largest.

[Calculation of greenhouse effect gas reduction amount]

The greenhouse-effect-gas reduction-amount calculation unit 40 calculates a greenhouse effect gas emission amount and further makes a comparison with a reference greenhouse effect gas emission amount calculated using the reference fuel consumption amount to calculate a reduction amount of the greenhouse effect gas, based on the fuel consumption amount calculated by the fuel consumption amount calculation unit 20.

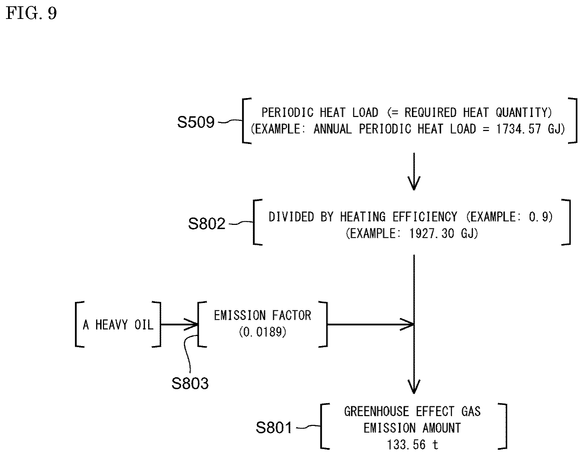

Specifically, as illustrated in FIG. 9, first, the periodic heat load (S509) which is the required heat quantity found by the required heat quantity calculation unit 120 is converted to the greenhouse effect gas emission amount. For example, when an annual periodic heat load = 1734.57 GJ which is the required heat quantity is found by the required heat quantity calculation unit 120 (S509), this is divided by, for example, the heating efficiency = 0.9 to obtain 1927.30 GJ as described above (S802). This value is multiplied by an emission factor (S803) linked according to the kind of fossil fuel. The kind of fossil fuel can be selected on the input screen, and as illustrated in FIG. 5, when the A heavy oil is selected, for example, a carbon dioxide emission factor = 0.0189 is adopted. Consequently, in an example of using the multilayer curtain A described above and operating heating equipment, 1927.30 GJ $\times$ 0.0189 $\times$ 44/12 = 133.56 t is found. The greenhouse effect gas emission amount found in this manner is displayed in FIG. 3.

That is, as illustrated in FIG. 3, the greenhouse effect gas emission amount is found similarly, and is 217 t in the case of using the lining covering material in the first section, 133.6 t in the case of using the lining covering material in the second section, and 636.4 t in the case of using no lining covering material in the third section.

Differences between the respective cases are found to be as follows.

$$\text{The second section} - \text{the third section} = -502.8 \text{ t/year}$$

$$\text{The first section} - \text{the third section} = -419.4 \text{ t/year}$$

$$\text{The first section} - \text{the second section} = +83.4 \text{ t/year}$$

When the case in the third section of using no lining covering material is set as a reference greenhouse effect gas emission amount, the greenhouse effect gas reduction amount caused by the lining covering material is 0 t in the case in the third section. Further, the greenhouse effect gas reduction amount in the case of using the lining covering material in the first section is 419.4 t/year, and the greenhouse effect gas reduction amount in the case of using the lining covering material in the second section is 502.8 t/year.

Note that the greenhouse-effect-gas reduction-amount calculation unit 40 can convert an amount corresponding to the greenhouse effect gas reduction amount to that in a case of being absorbed by trees and convert it to an annual carbon dioxide emission amount of households to display the conversions, as reference information. For example, in a case of artificial forest of cedars, carbon dioxide of about 14 kg is captured for one year in terms per tree. Further, a carbon dioxide emission amount per household is set to 2.88 t in fiscal year 2020 (Ministry of Environment). Thus, the calculation can be made by dividing the greenhouse effect gas emission amount found in the above manner by using these numerical values. In FIG. 3, the numerical values of the conversion to trees and the conversion to households are displayed regarding each of the case in the first section, the case in the second section, and the case of the third section.

According to this embodiment, the heat transfer index (average heat-release coefficient or the like) of the lining covering material is used for the calculation of the fuel consumption amount. Thus, the configurations of the lining covering material, that is, both the single-layer one of one curtain member and the multilayer curtain made by appropriately combining two or more curtain members allow the simulation of energy-saving performance such as the fuel consumption amount, the fuel reduction amount, the fuel reduction cost, and the greenhouse effect gas reduction amount according to a difference between their configurations. Consequently, to be useful for the selection of the configuration of the lining covering material, in particular, the selection of the combination of the curtain members in the case of adopting the multilayer curtain can contribute to enhancing the energy-saving performance. Meanwhile, as compared with conventional ones, a degree of freedom of the combination of the multilayer curtain is also extended.

The greenhouse energy-saving performance simulation apparatus 1 of the above embodiment is provided with the heat transfer index determination unit 110 which calculates the fuel consumption amount, including the heat transfer index of the lining covering material in the calculation element, and in order to visualize the energy-saving performance, finds the heat transfer indexes such as the average heat-release coefficients of various types of lining covering materials.

The heat transfer index determination unit 110 only reads and determines the heat transfer index of the selected curtain member in the case of setting the lining covering material as the single layer, and performs execution using the prediction model constructed beforehand as described above in the case of setting it as the multilayer curtain. Thus, a multilayer-curtain curtain heat transfer index calculation apparatus 1000 constituted of a computer which finds a heat transfer index in a multilayer state of a multilayer curtain can also be constructed by using the heat transfer index determination unit 110.

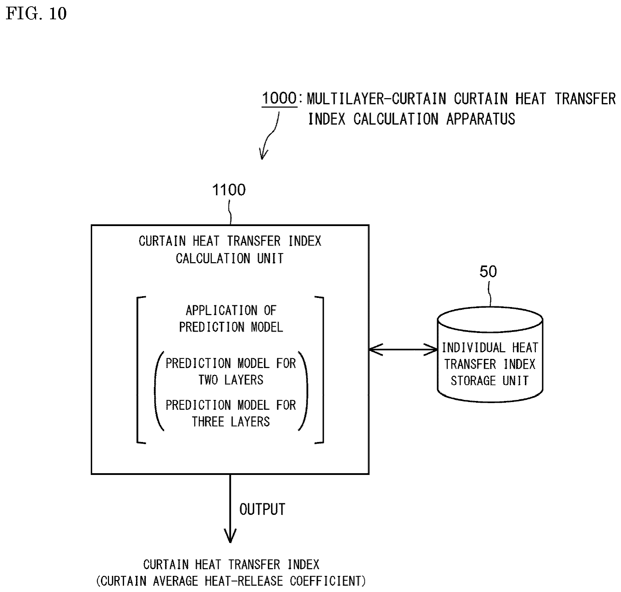

The multilayer-curtain curtain heat transfer index calculation apparatus 1000 includes a curtain heat transfer index calculation unit 1100 with the same configuration as the heat transfer index determination unit 110 described above as illustrated in FIG. 10. That is, when the multilayer curtain A configured to arrange a plurality of curtain members in multiple layers is used as a lining covering material, the curtain heat transfer index calculation unit 1100 gains access to the individual heat transfer index storage unit 50, reads individual heat transfer indexes of the plurality of curtain members which have been selected, uses a prediction model generated by machine learning with individual heat transfer indexes of curtain members set as explanatory variables and with a curtain heat transfer index which is a heat transfer index in multilayer state of a multilayer curtain set as a objective variable, and calculates a curtain heat transfer index of the multilayer curtain constituted of the plurality of curtain members which have been selected.

An example of the prediction model is the same as the above-described prediction model for two layers and prediction model for three layers. As long as the curtain members of the upper layer, the middle layer, and the lower layer are selected, a heat transfer index in the multilayer state thereof is calculated by using the prediction model. The heat transfer index can also use the average heat-release coefficient or the like similarly to the above. According to the multilayer-curtain curtain heat transfer index calculation apparatus 1000, the heat transfer indexes of the multilayer curtains in various combinations can be calculated depending on the selection of the curtain members. Consequently, when the lining covering material is adopted, the selection becomes possible in reference to the average heat-release coefficients of the simulated multilayer curtains. When the average heat-release coefficient is adopted as the heat transfer index, the lower the value of the average heat-release coefficient is, the higher the heat-retaining property is, so that one having a higher heat-retaining property can be selected from among a plurality of combinations in reference to the output average heat-release coefficients.

Note that it is preferable similarly to the above embodiment that as the curtain member A1 in the upper layer, by comparison with the curtain members A1, A2 in further lower layers, an equal or more one is set to be selected in terms of the heat-retaining property, that is, by the comparison with the curtain members A2, A3 in the middle layer or the lower layer, one in which the individual average heat-release coefficient has the same value as or a value lower than it is set to be selected. In this case, for example, it is also possible similarly to the above embodiment to, when the individual average heat-release coefficient of the curtain member A1 in the upper layer which has been selected is higher than the average heat-release coefficients of the curtain members A2, A3 for middle layer or for lower layer, perform processing for reselection, or perform processing in which in a step of selecting the curtain members A2, A3 for middle layer or for lower layer, only ones higher in the average heat-release coefficient than the curtain member A1 in the upper layer which has already been selected are shown in a list, and to, when the curtain members A2, A3 for middle layer or for lower layer are selected in advance, perform processing in which only one lower in the individual average heat-release coefficient than them is displayed in the list as the curtain member A1 for upper layer.

Explanation of Reference Signs

1 greenhouse energy-saving performance simulation apparatus
10 fuel consumption amount calculation unit
110 heat transfer index determination unit
120 required heat quantity calculation unit
20 fuel reduction amount calculation unit
30 fuel reduction cost calculation unit
40 greenhouse-effect-gas reduction-amount calculation unit
50 individual heat transfer index storage unit
51 structure information database
52 plant information database
53 weather information database
1000 multilayer-curtain curtain heat transfer index calculation apparatus
1100 curtain heat transfer index calculation unit

**Claims**

1. A greenhouse energy-saving performance simulation apparatus comprising:

   a fuel consumption amount calculation unit which finds, in a case of cultivating a predetermined plant during a predetermined period in a greenhouse, a fuel consumption amount for securing a heat quantity required for maintenance of a set night temperature suitable for the plant, including a heat transfer index of a lining covering material in the greenhouse in a calculation element; and
   a fuel reduction amount calculation unit which compares the fuel consumption amount with a reference fuel consumption amount, and finds a reduction amount of fuel consumption caused by using the lining covering material.

2. The greenhouse energy-saving performance simulation apparatus according to claim 1, comprising
   a fuel reduction cost calculation unit which calculates a fuel cost and makes a comparison with a reference fuel cost calculated using the reference fuel consumption amount to calculate a fuel reduction cost, based on the fuel consumption amount calculated by the fuel consumption amount calculation unit.

3. The greenhouse energy-saving performance simulation apparatus according to claim 1, comprising
   a greenhouse-effect-gas reduction-amount calculation unit which calculates a greenhouse effect gas emission amount and makes a comparison with a reference greenhouse effect gas emission amount calculated using the reference fuel consumption amount to calculate a reduction amount of the greenhouse effect gas, based on the fuel consumption amount calculated by the fuel consumption amount calculation unit.

4. The greenhouse energy-saving performance simulation apparatus according to claim 1, wherein
the fuel consumption amount calculation unit comprises a heat transfer index determination unit which finds a heat transfer index of the lining covering material.

5. The greenhouse energy-saving performance simulation apparatus according to claim 4, wherein
when a single-layer curtain member is selected as the lining covering material, the heat transfer index determination unit gains access to an individual heat transfer index storage unit which stores individual heat transfer indexes of curtain members, reads an individual heat transfer index of the curtain member which has been selected, and determines the individual heat transfer index which has been read as a heat transfer index of the lining covering material.

6. The greenhouse energy-saving performance simulation apparatus according to claim 4, wherein

the heat transfer index determination unit,
when a multilayer curtain configured to arrange a plurality of curtain members in multiple layers is used as the lining covering material, gains access to an individual heat transfer index storage unit which stores individual heat transfer indexes of curtain members, reads individual heat transfer indexes of the plurality of curtain members which have been selected, uses a prediction model generated by machine learning with individual heat transfer indexes of curtain members set as explanatory variables and with a curtain heat transfer index which is a heat transfer index in a multilayer state of a multilayer curtain set as an objective variable, calculates a curtain heat transfer index of the multilayer curtain constituted of the plurality of curtain members which have been selected, and determines the curtain heat transfer index as a heat transfer index of the lining covering material.

7. The energy-saving performance simulation apparatus according to claim 6, wherein
the curtain heat transfer index is calculated under a condition in which a curtain member in an uppermost layer has an equal or more heat-retaining property by a comparison with a curtain member in a further lower layer between the curtain members constituting the multilayer curtain.

8. The energy-saving performance simulation apparatus according to claim 1, wherein
as the heat transfer index, an average heat-release coefficient found from a value obtained by dividing a heating heat quantity for a night by a nighttime degree hour for the night and a coverage area is used.

9. A multilayer-curtain curtain heat transfer index calculation apparatus which calculates a curtain heat transfer index which is a heat transfer index in a multilayer state of a multilayer curtain, configured to arrange curtain members in multiple layers, of a lining covering material provided in a greenhouse, the multilayer-curtain curtain heat transfer index calculation apparatus comprising
a curtain heat transfer index calculation unit which uses a prediction model generated by machine learning with individual heat transfer indexes of a plurality of the curtain members constituting the multilayer curtain set as explanatory variables and with a curtain heat transfer index of the multilayer curtain set as an objective variable, reads, based on selection information of the curtain members, individual heat transfer indexes of corresponding curtain members from an individual heat transfer index storage unit which stores individual heat transfer indexes of the curtain members, and calculates a curtain heat transfer index of the multilayer curtain constituted of the plurality of curtain members which have been selected.

10. The multilayer-curtain curtain heat transfer index calculation apparatus according to claim 9, wherein
the curtain heat transfer index is calculated under a condition in which a curtain member in an uppermost layer has an equal or more heat-retaining property by a comparison with a curtain member in a further lower layer between the curtain members constituting the multilayer curtain.

11. The multilayer-curtain curtain heat transfer index calculation apparatus according to claim 9, wherein
as the heat transfer index, an average heat-release coefficient found from a value obtained by dividing a heating heat quantity for a night by a nighttime degree hour for the night and a coverage area is used.

12. A computer program which causes a computer to function as a greenhouse energy-saving performance simulation apparatus, the computer program causing the computer to execute

a procedure for finding, in a case of cultivating a predetermined plant during a predetermined period in a greenhouse, a fuel consumption amount for securing a heat quantity required for maintenance of a set night temperature suitable for the plant, including a heat transfer index of a lining covering material in the greenhouse in a calculation element; and

a procedure for comparing the fuel consumption amount with a reference fuel consumption amount, and finding a reduction amount of fuel consumption caused by using the lining covering material.

13. The computer program according to claim 12, wherein
a fuel cost is calculated and compared with a reference fuel cost calculated using the reference fuel consumption amount to calculate a fuel reduction cost, based on the fuel consumption amount.

14. The computer program according to claim 12, wherein
a greenhouse effect gas emission amount is calculated and compared with a reference greenhouse effect gas emission amount calculated using the reference fuel consumption amount to calculate a reduction amount of the greenhouse effect gas, based on the fuel consumption amount.

15. The computer program according to claim 12, wherein
when a single-layer curtain member is selected as the lining covering material, access to an individual heat transfer index storage unit which stores individual heat transfer indexes of curtain members is gained, an individual heat transfer index of the curtain member which has been selected is read, and the individual heat transfer index which has been read is used as a heat transfer index of the lining covering material.

16. The computer program according to claim 12, wherein
when a multilayer curtain configured to arrange a plurality of curtain members in multiple layers is used as the lining covering material, access to an individual heat transfer index storage unit which stores individual heat transfer indexes of curtain members is gained, individual heat transfer indexes of the plurality of curtain members which have been selected are read, a prediction model generated by machine learning with individual heat transfer indexes of curtain members set as explanatory variables and with a curtain heat transfer index which is a heat transfer index in a multilayer state of a multilayer curtain set as an objective variable is used, a curtain heat transfer index of the multilayer curtain constituted of the plurality of curtain members which have been selected is calculated, and the curtain heat transfer index is used as a heat transfer index of the lining covering material.

17. The computer program according to claim 16, wherein
the curtain heat transfer index is calculated under a condition in which a curtain member in an uppermost layer has an equal or more heat-retaining property by a comparison with a curtain member in a further lower layer between the curtain members constituting the multilayer curtain.

18. The computer program according to claim 12, wherein
as the heat transfer index, an average heat-release coefficient found from a value obtained by dividing a heating heat quantity for a night by a nighttime degree hour for the night and a coverage area is used.

19. A computer program which causes a computer to function as a multilayer-curtain curtain heat transfer index calculation apparatus, the computer program causing the computer to execute

as a procedure for estimating a curtain heat transfer index which is a heat transfer index in a multilayer state of a multilayer curtain in which curtain members are arranged in multiple layers in a greenhouse,

a procedure for using a prediction model generated by machine learning with individual heat transfer indexes of a plurality of the curtain members constituting the multilayer curtain set as explanatory variables and with a curtain heat transfer index of the multilayer curtain set as an objective variable, reading, based on selection information of the curtain members, individual heat transfer indexes of corresponding curtain members from an individual heat transfer index storage unit which stores individual heat transfer indexes of the curtain members, and calculating a heat transfer index of the multilayer curtain constituted of the plurality of curtain members which have been selected.

20. The computer program according to claim 19, wherein
the curtain heat transfer index is calculated under a condition in which a curtain member in an uppermost layer has an equal or more heat-retaining property by a comparison with a curtain member in a further lower layer between the curtain members constituting the multilayer curtain.

21. The computer program according to claim 19, wherein
as the heat transfer index, an average heat-release coefficient found from a value obtained by dividing a heating heat quantity for a night by a nighttime degree hour for the night and a coverage area is used.

22. A computer-readable recording medium in which the computer program according to any one of claims 12 to 21 is recorded.

FIG. 1

1: GREENHOUSE ENERGY-SAVING PERFORMANCE
SIMULATION APPARATUS

FIG. 2

(a)

(b)

FIG. 3

EP 4 685 728 A1

▼ ANNUAL ENERGY-SAVING EFFECT CAUSED BY LINING COVERING MATERIAL

| | FIRST SECTION | SECOND SECTION | THIRD SECTION | ▼ DIFFERENCE | | |
|---|---|---|---|---|---|---|
| KIND OF LINING COVERING MATERIAL | TEMPA 5557D | TEMPA 6562D + LUXOUS 1 | ABSENCE | | | |
| AVERAGE HEAT-RELEASE COEFFICIENT | 2.6 kcal/m²h℃ | 1.9 kcal/m²h℃ | 5.6 kcal/m²h℃ | | | |
| FLOOR AREA | 16,000 m² | 16,000 m² | 16,000 m² | FIRST SECTION − SECOND SECTION | SECOND SECTION − THIRD SECTION | FIRST SECTION − THIRD SECTION |
| SURFACE AREA | 20,172 m² | 20,172 m² | 20,172 m² | | | |
| ANNUAL FUEL CONSUMPTION AMOUNT | 80,102 L | 49,292 L | 234,875 L | +30,810 L | −185,583 L | −154,773 L |
| HEATING COST (1 YEAR) | ¥ 6,328,051 | ¥ 3,894,068 | ¥ 18,555,123 | ¥ +2,433,983 | ¥ −14,661,055 | ¥ −12,227,072 |
| HEATING COST (5 YEARS) | ¥ 31,640,253 | ¥ 19,470,340 | ¥ 92,775,615 | ¥ +12,169,915 | ¥ −73,305,275 | ¥ −61,135,362 |
| GREENHOUSE EFFECT GAS EMISSION AMOUNT FOR USE OF LINING COVERING MATERIAL | 217 t | 133.6 t | 636.4 t | +83.4 t | −502.8 t | −419.4 t |
| GREENHOUSE EFFECT GAS EMISSION AMOUNT FOR ABSENCE OF LINING COVERING MATERIAL | 636.4 t | 636.4 t | 636.4 t | | | |
| GREENHOUSE EFFECT GAS EMISSION REDUCTION AMOUNT | 419. 4 t/YEAR | 502. 8 t/YEAR | 0 t/YEAR | | | |
| NUMBER OF TREES REQUIRED FOR ABSORPTION OF $CO_2$ | ABOUT 15,500 TREES/YEAR | ABOUT 9,500 TREES/YEAR | ABOUT 45,500 TREES/YEAR | | | |
| HOUSEHOLD EMISSION AMOUNT OF $CO_2$ | EQUIVALENT OF ABOUT 75 HOUSEHOLDS/YEAR | EQUIVALENT OF ABOUT 46 HOUSEHOLDS/YEAR | EQUIVALENT OF ABOUT 220 HOUSEHOLDS/YEAR | | | |

FIG. 4

EP 4 685 728 A1

▼ ANNUAL ENERGY-SAVING EFFECT CAUSED BY COVERING MATERIAL

|  | FIRST SECTION | SECOND SECTION | THIRD SECTION |
|---|---|---|---|
| KIND OF LINING COVERING MATERIAL | TEMPA 5557D | LUXOUS 1243D + TEMPA ··· | ABSENCE |
| AVERAGE HEAT-RELEASE COEFFICIENT | 2.6 kcal/m²h℃ | 1.9 kcal/m²h℃ | |

(a)

(b)  POPUP WINDOW

UPPER LAYER     LUXOUS 1243D ▼

MIDDLE LAYER    TEMPA 9870 ▼

LOWER LAYER     HARMONY 42150 ▼

CANCEL    DECISION

LIST

ABSENCE

LUXOUS 1243D

LUXOUS 1347F

LUXOUS 1547DFR

TEMPA 6562D

TEMPA 9870

HARMONY 3345

HARMONY 5545

HARMONY 42150

HARMONY 52150

· · ·

FIG. 5

▼ INPUT

RESIDUAL HEAT QUANTITY [ 15,000 ] kcal/h

[ ] GJ/h

PLACE NAME [ SAPPORO ] PLACE SEARCH

☑ USE MINIMUM AIR TEMPERATURE WITHIN CULTIVATION PERIOD

CULTIVATION INFORMATION

CO2 SUPPLY AMOUNT [ 15 ] kg/h

KIND OF CROP [ TOMATO ▼ ]

SET NIGHT TEMPERATURE [ 15.5 ] ℃

CULTIVATION START DATE [▦ 09.01 ]

CULTIVATION END DATE [▦ 06.30 ]

HEAT QUANTITY — KIND OF FUEL: [ A HEAVY OIL ▼ ]

UNIT PRICE: [ 79 YEN ] /L

CO2 — KIND OF FUEL: [ LPG ▼ ]

UNIT PRICE: [ 256 YEN ] /kg

MARKET UNIT PRICE

HEAT QUANTITY [ 2,000 YEN ] /GJ

CO2 [ 85 YEN ] /kg

FACTORY TRANSACTION UNIT PRICE

HEAT QUANTITY [ 1,100 YEN ] /GJ

CO2 [ 38 YEN ] /kg

KIND · UNIT PRICE INPUT

HOUSE INFORMATION

KIND OF LINING COVERING MATERIAL [ LUXOUS + TEMPA ▼ ]

AVERAGE HEAT-RELEASE COEFFICIENT [ 1.9 ] kcal/m²h℃

KIND OF ROOF MATERIAL [ FRA ▼ ]

ROOF SHAPE [ TRIANGULAR ROOF ▼ ]

AVERAGE HEAT-RELEASE COEFFICIENT [ 5 ] kcal/m²h℃

LIGHT TRANSMITTANCE [ ] %

OPENING [ 8 ] m

EAVE HEIGHT [ 5 ] m

SPAN LENGTH [ 5 ] m

ASPECT RATIO [ 1.5 ]

RECYCLING RATE [ 100 ] %

HEATING EFFICIENCY [ 0.9 ]

DESIGN AREA [ 1,000 ] m²

DESIGN COVERAGE AREA [ 1,890.5 ] m²

INPUT SCREEN

FIG. 6

FIG. 7

FIG. 8

[ PUBLIC WEATHER DATA ]

[ DAYTIME INDOOR SET TEMPERATURE
— OUTSIDE AIR TEMPERATURE —
INDOOR SOLAR HEAT EFFECT TEMPERATURE ] ~ S703

[ DAILY NIGHTTIME HEATING LOAD ] ~ S507

[ DAILY DAYTIME HEATING LOAD ] ~ S701

[ DAILY PERIODIC HEAT LOAD ] ~ S702

[ PERIODIC HEAT LOAD ] ~ S509

FIG. 9

S509 —— [ PERIODIC HEAT LOAD (= REQUIRED HEAT QUANTITY)
(EXAMPLE: ANNUAL PERIODIC HEAT LOAD = 1734.57 GJ) ]

↓

S802 —— [ DIVIDED BY HEATING EFFICIENCY (EXAMPLE: 0.9)
(EXAMPLE: 1927.30 GJ) ]

[ A HEAVY OIL ] → [ EMISSION FACTOR
(0.0189) ] →

S803

↓

S801 —— [ GREENHOUSE EFFECT GAS
EMISSION AMOUNT
133.56 t ]

FIG. 10

1000:MULTILAYER-CURTAIN CURTAIN HEAT TRANSFER
INDEX CALCULATION APPARATUS

1100

```
CURTAIN HEAT TRANSFER INDEX
CALCULATION UNIT

  ┌                              ┐
        APPLICATION OF
       PREDICTION MODEL

    ⎛ PREDICTION MODEL FOR ⎞
    ⎜      TWO LAYERS       ⎟
    ⎜                       ⎟
    ⎜ PREDICTION MODEL FOR ⎟
    ⎝     THREE LAYERS      ⎠
  └                              ┘
```

50

INDIVIDUAL HEAT
TRANSFER INDEX
STORAGE UNIT

OUTPUT

CURTAIN HEAT TRANSFER INDEX
(CURTAIN AVERAGE HEAT-RELEASE COEFFICIENT)

## INTERNATIONAL SEARCH REPORT

| International application No. |
| --- |
| **PCT/JP2023/044186** |

| A. | CLASSIFICATION OF SUBJECT MATTER |
| --- | --- |

*G06Q 50/02*(2024.01)i; *A01G 9/24*(2006.01)i
FI:  G06Q50/02; A01G9/24 H

According to International Patent Classification (IPC) or to both national classification and IPC

| B. | FIELDS SEARCHED |
| --- | --- |

Minimum documentation searched (classification system followed by classification symbols)

G06Q50/02; A01G9/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107562996 A (JIANGSU UNIVERSITY) 09 January 2018 (2018-01-09)<br>paragraphs [0004]-[0019], [0024]-[0050], etc. | 1-4, 12-14 |
| A | paragraphs [0004]-[0019], [0024]-[0050], etc. | 5-11, 15-22 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 January 2024** | **06 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| | International application No. |
| | PCT/JP2023/044186 |

| Patent document cited in search report | Publication date (day/month/year) | Patent family member(s) | Publication date (day/month/year) |
|---|---|---|---|
| CN 107562996 A | 09 January 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008029314 A

- JP 2016192915 A

**Non-patent literature cited in the description**

- **TADASHI TAKAKURA** ; **MASUMI OKADA**. Experimental Determination of Greenhouse Heating Load Coefficient. *Journal of Agricultural Meteorology*, March 1972, vol. 27 (3)

- *Journal of Agricultural Meteorology (J. Agr. Met.)*, 1982, vol. 38 (1), 29-36
- **MAKIO HAYASHI** ; **TOYOKI KOZAI**. *Comparison of Actual and Calculated Heating Degree Hours and a Proposition of Heating Degree Hour Diagram*